# EUROPEAN PATENT APPLICATION

(11) **EP 4 832 474 A1**
(43) Date of publication of application: **28.10.2026**
(21) Application number: 26173327.3
(22) Date of filing: 20.04.2026
(51) Int. Cl.: H04N 1/44, G06F 3/12, G06F 21/60

(54) **IMAGE FORMING APPARATUS**

(30) Priority: 24.04.2025 JP 2025072047
(71) Applicant: Sharp Kabushiki Kaisha, Sakai City, Osaka 590-8522 (JP)
(72) Inventor: KAMIHISA, Sho, Osaka, 590-8522 (JP)
(74) Representative: Müller Hoffmann & Partner

(57) **Abstract**

An image forming apparatus (101) is capable of being connected to an external storage medium (201) storing a first file and a second file. The image forming apparatus (101) includes a printer (141) that performs printing, a display (132), and one or more controllers (111) that control the printer and the display. When the first file is selected, and print start for the first file is confirmed, the one or more controllers display a predetermined screen on the display (132), and disable selection of the second file.

## Description

### CROSS-REFERENCE TO RELATED APPLICATION

The present application claims priority from Japanese Application JP2025-072047, the content to which is hereby incorporated by reference into this application.

### BACKGROUND OF THE INVENTION

### 1. Field of the Invention

The disclosure relates to an image forming apparatus.

### 2. Description of the Related Art

A multifunction peripheral (MFP) has a function of printing a file stored in a universal serial bus (USB) memory connected to the MFP. A user selects a file from the USB memory, and the MFP prints the selected file.

There has been known a technique in which, when print data stored in an external storage is printed, and the print data is encrypted, entry of a password is requested, and the selected print data is decrypted based on the entered password and is printed.

### SUMMARY

There is a case in which, after a user selects a file from a USB memory and presses down a print start button for the selected file, when the selected file is an encrypted file, a password entry screen on which the user enters an encryption password is displayed.

In the related-art MFP, after the print start button for the selected file is pressed down, a file selection screen on which a subsequent file is selected is displayed. When the password entry screen on which the encryption password is entered is displayed while the user selects the subsequent file and performs an operation, the user may confuse whether the password entry is for the file currently being operated or for the file for which printing has already been started.

In a case in which a first file is read from a USB memory and printed, when the size of the first file is large, reading requires time, and a print start screen for the first file is displayed during a print operation for a second file, and a user may mistakenly recognize that printing of the second file is started.

An object of an aspect of the present invention is to provide an image forming apparatus that prevents erroneous recognition of a file to be operated.

An image forming apparatus according to the aspect of the disclosure is an image forming apparatus capable of being connected to an external storage medium storing a first file and a second file, the image forming apparatus including a printer that performs printing, a display, and one or more controllers that control the printer and the display, wherein, when the first file is selected, and print start for the first file is confirmed, the one or more controllers display a predetermined screen on the display, and disable selection of the second file.

According to the image forming apparatus according to the aspect of the disclosure, erroneous recognition of a file to be operated can be prevented.

### BRIEF DESCRIPTION OF THE DRAWINGS

FIG. 1 is a functional block diagram of an MFP according to an embodiment.
FIG. 2A is a flowchart of control processing according to the embodiment.
FIG. 2B is a flowchart of the control processing according to the embodiment.
FIG. 3 is an example of a screen displayed on a display.
FIG. 4 is an example of the screen displayed on the display.
FIG. 5 is an example of the screen displayed on the display.
FIG. 6 is an example of the screen displayed on the display.
FIG. 7 is an example of the screen displayed on the display.
FIG. 8A is a flowchart of control processing according to another embodiment.
FIG. 8B is a flowchart of the control processing according to the other embodiment.
FIG. 8C is a flowchart of the control processing according to the other embodiment.
FIG. 9 is an example of the screen displayed on the display.
FIG. 10 is an example of the screen displayed on the display.
FIG. 11 is an example of the screen displayed on the display.
FIG. 12 is an example of the screen displayed on the display.
FIG. 13 is an example of the screen displayed on the display.
FIG. 14A is an example of the screen displayed on the display.
FIG. 14B is an example of the screen displayed on the display.
FIG. 15 is an example of the screen displayed on the display.
FIG. 16 is an example of the screen displayed on the display.

### DETAILED DESCRIPTION OF THE INVENTION

An embodiment is described below with reference to the drawings. Note that, in the drawings, the same or equivalent elements are denoted by the same reference signs, and redundant descriptions are omitted.

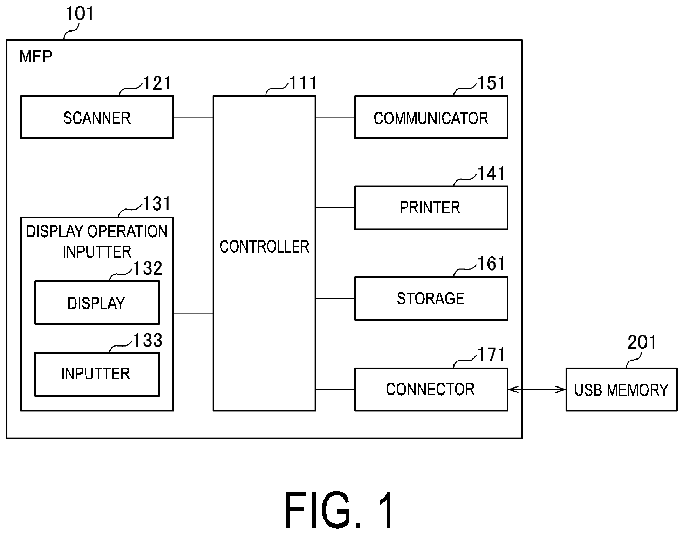

FIG. 1 is a functional block diagram of an MFP according to an embodiment.

A multifunction peripheral (MFP) 101 includes a controller 111, a scanner 121, a display operation inputter 131, a printer 141, a communicator 151, a storage 161, and a connector 171. The MFP 101 is an example of an image forming apparatus.

The controller 111 performs control of the MFP 101, such as scanning, printing, and copying. The controller 111 controls the scanner 121, the display operation inputter 131, the printer 141, the communicator 151, the storage 161, and the connector 171. The controller 111 is implemented by, for example, one or more processors such as central processing units (CPUs), or one or more logic circuits (hardware) formed in an integrated circuit (IC) chip, or the like.

The scanner 121 reads a document placed on a document table (omitted in illustration) of the MFP 101 or the like, and generates image data relating to the read document.

The display operation inputter 131 displays various types of information, and receives an operation input from a user. The display operation inputter 131 is, for example, a touch panel. The display operation inputter 131 includes a display 132 and an inputter 133. The display 132 performs various types of display according to display control signals from the controller 111. The display 132 is, for example, a liquid crystal display, an organic electro luminescence (EL) display, or the like. The inputter 133 is, for example, a position input device, and detects coordinates of a contact position with a finger, a touch pen, or the like at the inputter 133, and outputs the detected coordinates to the controller 111. In the inputter 133, hardware keys such as operation buttons may be used.

The printer 141 prints characters, images, and the like on paper fed from a feeder (omitted in illustration), based on print data (files) or the like stored in the storage 161 or a universal serial bus (USB) memory 201.

The communicator 151 communicates with a personal computer (PC) (omitted in illustration) or the like connected via a network, under the control of the controller 111, and executes data conversion accompanying the communication. The communicator 151 is, for example, a wired communication interface or a wireless communication interface, and specifically, is, for example, a communication interface such as Ethernet (trade name) or Wi-Fi (trade name).

The storage 161 stores various programs and various types of data necessary for operating the MFP 101. The storage 161 may be constituted by, for example, one or more storage devices such as random access memories (RAMs), hard disk drives (HDDs), solid state drives (SSDs), or read only memories (ROMs).

The connector 171 is an interface connected to other apparatuses. Specifically, for example, the connector 171 is a USB connector. In the embodiment, the connector 171 is connected to the USB memory 201. The USB memory 201 is an example of an external storage medium. The USB memory 201 stores a plurality of pieces of print data (files).

Next, processing where a user prints a file from the USB memory 201 is described.

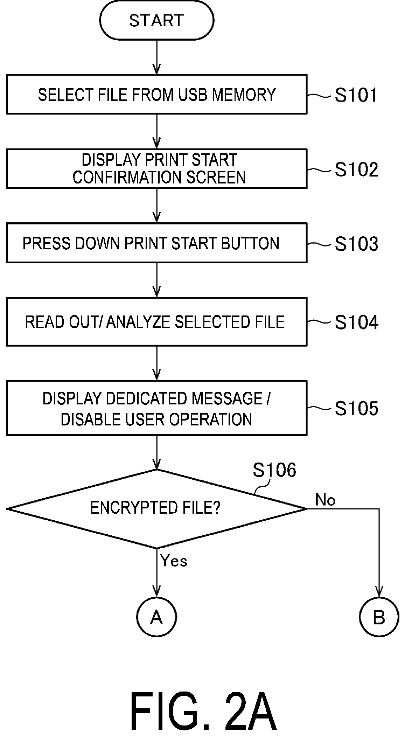

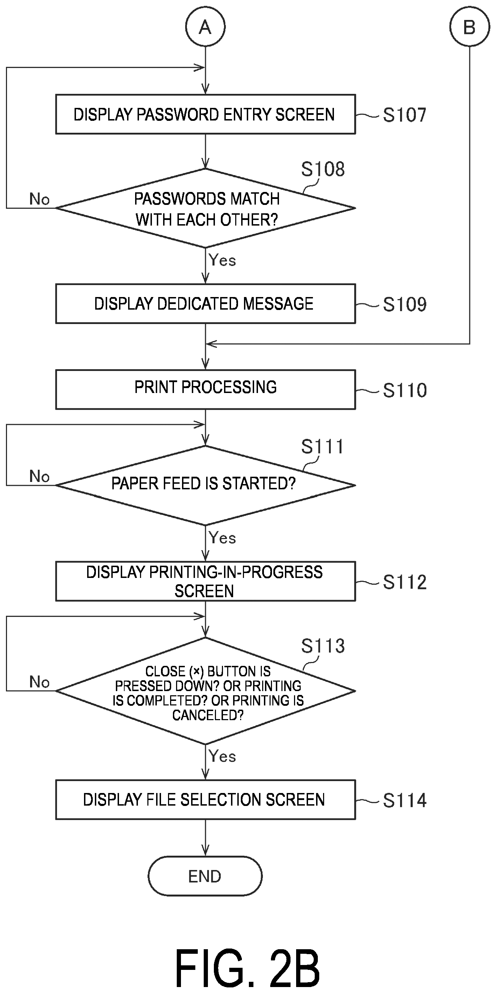

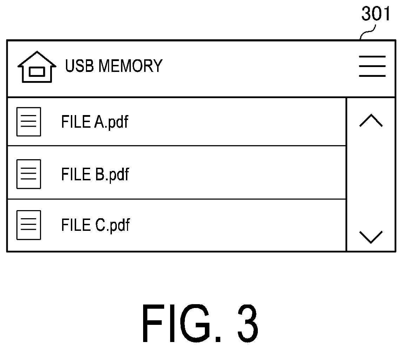

FIG. 2A and FIG. 2B are flowcharts of control processing according to the embodiment. FIG. 3 to FIG. 7 are examples of a screen displayed on the display.

Here, the USB memory 201 is connected to the connector 171, and a file selection screen 301 (FIG. 3) on which the files in the USB memory 201 can be displayed and selected is displayed on the display 132. For example, as shown on the file selection screen 301 in FIG. 3, the USB memory 201 stores File A. pdf, File B. pdf, and File C. pdf.

In Step S101, a user selects a file to be printed from the USB memory 201 on the file selection screen 301 by using the inputter 133. Specifically, for example, the user selects File A. pdf. File A. pdf is an example of a first file. File B. pdf or File C. pdf is an example of a second file.

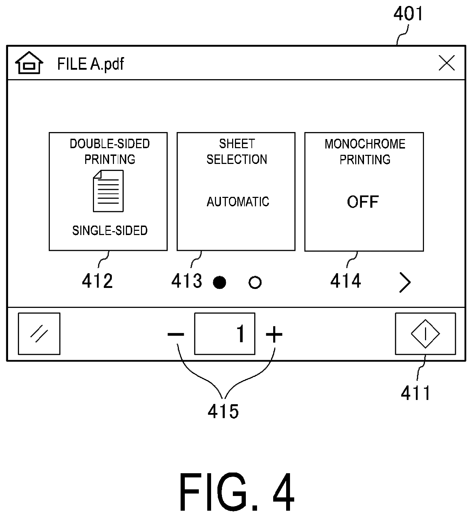

In Step S102, when the file is selected, the controller 111 displays, on the display 132, a print start confirmation screen 401 (FIG. 4) that allows printing of the selected file. On the print start confirmation screen 401, a print start button 411 that starts printing, a button 412 that sets single-sided/double-sided, a button 413 that sets a sheet, a button 414 that sets monochrome/color, and a button 415 that sets the number of prints are displayed.

In Step S103, the user presses down the print start button 411 by using the inputter 133.

When the print start button 411 is pressed down, the controller 111 reads the file selected in Step S101 from the USB memory 201, and analyzes whether the read file is encrypted in Step S104. Specifically, for example, the controller 111 reads File A. pdf from the USB memory 201, and analyzes whether File A. pdf is encrypted.

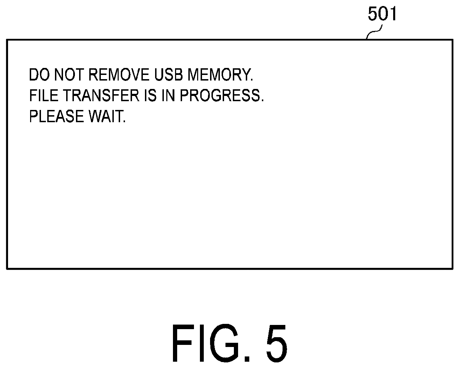

In Step S105, the controller 111 displays, on the display 132, a dedicated message screen 501 containing a dedicated message (Fig. 5), and disables selection of a file from the USB memory 201. Specifically, for example, the controller 111 disables a user operation. As illustrated in FIG. 5, on the dedicated message screen 501, the dedicated message "Do not remove the USB memory. File transfer is in progress. Please wait" is displayed. The dedicated message screen 501 is an example of a predetermined screen. While the dedicated message screen 501 is displayed, a user operation is disabled. Thus, the user cannot newly select a file from the USB memory 201. Note that, in a case of printing another file different from the file selected in Step S101, when printing of the other file is completed, the controller 111 may display, on the dedicated message screen 501, a button that closes the dedicated message screen 501. In a case of printing another file different from the file selected in Step S101, the controller 111 may display, on the dedicated message screen 501, a button that closes the dedicated message screen 501, and may disable the close button (pressing of the button may be ignored) until printing of the other file is terminated. The controller 111 may display the button that closes the dedicated message screen 501 in different colors so that the disabled state of the button that closes the dedicated message screen 501 is apparent.

In Step S106, the controller 111 determines whether the read file is an encrypted file, based on the analysis in Step S104. When it is determined that the read file is an encrypted file, the control proceeds to Step S107. When it is determined that the read file is not an encrypted file, the control proceeds to Step S110.

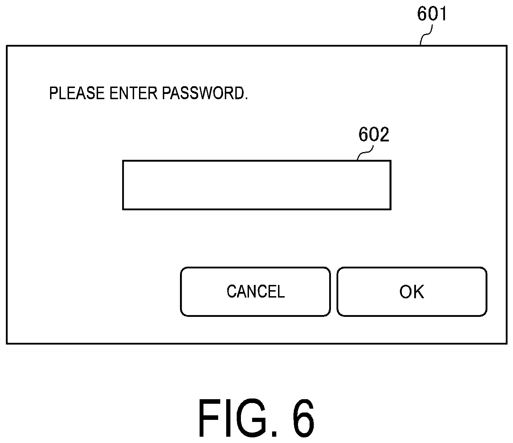

In Step S107, the controller 111 displays, on the display 132, a password input screen 601 (FIG. 6) on which a password of the encrypted file is entered. As illustrated in FIG. 6, on the password input screen 601, an entry box 602 in which a password is entered is displayed. Subsequently, the user enters the password of the encrypted file in the entry box 602 by using the inputter 133. Specifically, for example, the user enters a password of File A. pdf by using the inputter 133.

In Step S108, the controller 111 determines whether the entered password matches with the password that is set for the encrypted file. For example, when decryption of the encrypted file is successful with the entered password, the controller 111 determines that the entered password matches with the password that is set for the encrypted file. When it is determined that the entered password matches with the password that is set for the encrypted file, the control proceeds to Step S109. When it is determined that the entered password does not match with the password that is set for the encrypted file, the control returns to Step S107.

In Step S109, the controller 111 displays, on the display 132, the dedicated message screen 501 containing a dedicated message (Fig. 5), and disables selection of a file from the USB memory 201. The controller 111 displays the dedicated message screen 501 (FIG. 5) on the display 132 until printing of the selected file is started (paper feeding is started for print processing of the selected file).

In Step S110, the controller 111 starts the print processing of the selected file by using the printer 141.

In Step S111, the controller 111 determines whether printing of the selected file is started. Specifically, for example, the controller 111 determines whether paper feeding is started for the print processing of the selected file. When it is determined that printing of the selected file is started (when it is determined that paper feeding is started for the print processing of the selected file), the control proceeds to Step S112. When it is determined that printing of the selected file is not started (when it is determined that paper feeding is not started for the print processing of the selected file), the processing in Step S111 is repeated.

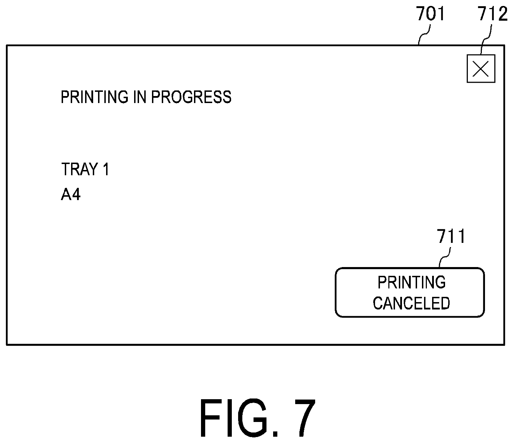

In Step S112, the controller 111 deletes the dedicated message screen 501 from the display 132, and displays, on the display 132, a printing-in-progress screen 701 (FIG. 7) indicating printing is in progress. As illustrated in FIG. 7, on the printing-in-progress screen 701, a message indicating that printing is in progress, a print cancel button 711 that cancels printing, and a button (close (×) button) 712 that closes the printing-in-progress screen 701 are displayed.

In Step S113, the controller 111 determines whether the close (×) button of the printing-in-progress screen 701 is pressed down by the user, whether printing is completed, or whether printing is canceled (whether the print cancel button 711 of the printing-in-progress screen 701 is pressed down by the user). When it is determined that the close (×) button of the printing-in-progress screen 701 is pressed down by the user, printing is completed, or printing is canceled (the print cancel button 711 of the printing-in-progress screen 701 is pressed down by the user), the control proceeds to Step S114. When it is not determined that the close (×) button of the printing-in-progress screen 701 is pressed down by the user, printing is completed, or printing is canceled (the print cancel button 711 of the printing-in-progress screen 701 is pressed down by the user), the processing in Step S113 is repeated.

In Step S114, the controller 111 displays, on the display 132, the file selection screen 301 (FIG. 3) on which the files in the USB memory 201 can be displayed and selected.

According to the image forming apparatus according to the embodiment, the dedicated message screen is displayed until printing of the firstly selected file (the first file) is started, and selection of the files in the USB memory is disabled while the dedicated message is displayed. With this, the timing at which the password entry is required for the first file and the timing at which the file to be subsequently printed (the second file) is selected do not overlap with each other, the user does not confuse which file is being processed, and erroneous recognition of a file to be operated can be prevented.

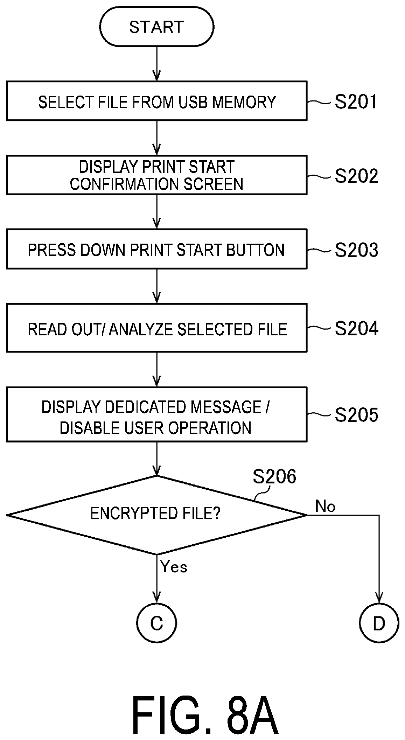

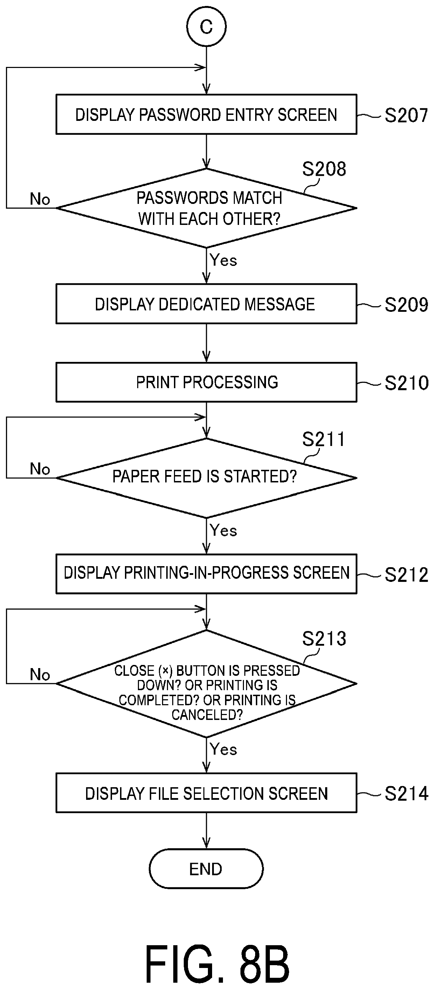

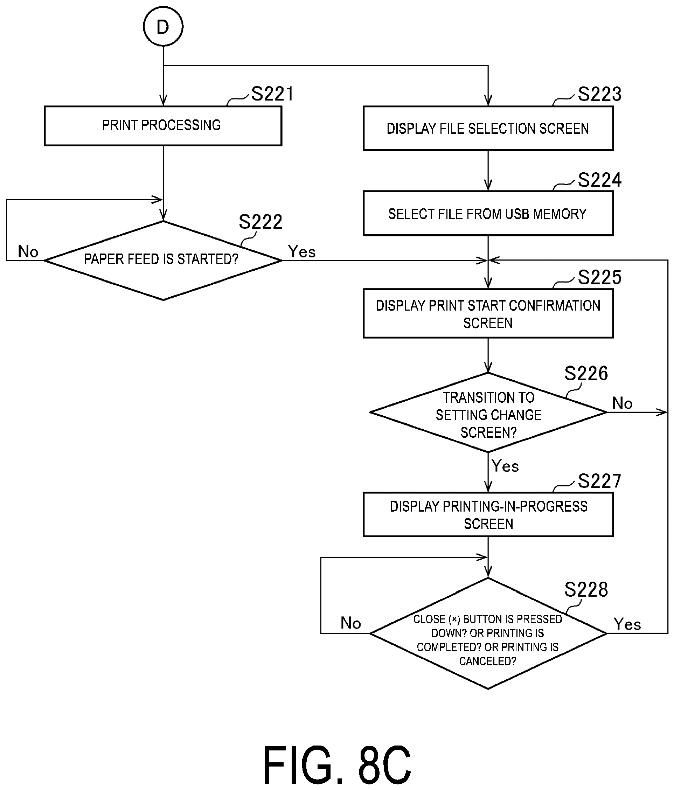

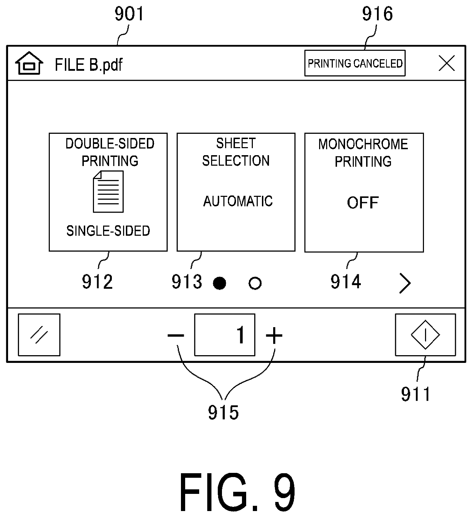

FIG. 8A to FIG. 8C are flowcharts of control processing according to another embodiment. FIG. 9 to FIG. 16 are examples of the screen displayed on the display.

Here, the USB memory 201 is connected to the connector 171, and the file selection screen 301 (FIG. 3) on which the files in the USB memory 201 can be displayed and selected is displayed on the display 132. For example, as shown on the file selection screen 301 in FIG. 3, the USB memory 201 stores File A. pdf, File B. pdf, and File C. pdf.

The processing in Steps S201 to S205 is similar to the processing in Steps S101 to S105, respectively, and hence descriptions thereof are omitted.

In Step S206, the controller 111 determines whether the read file is an encrypted file, based on the analysis in Step S204. When it is determined that the read file is an encrypted file, the control proceeds to Step S207. When it is determined that the read file is not an encrypted file, the control proceeds to Step S221 and Step S223.

The processing in Steps S207 to S214 is similar to the processing in Steps S107 to S114, respectively, and hence descriptions thereof are omitted. After Step S214, the control returns to Step S201.

Hereinafter, the processing in Steps S221 and S222 and the processing in Steps S223 to S225 are executed in parallel to each other. In Step S221, the controller 111 starts the print processing of the selected file by using the printer 141. Specifically, for example, the controller 111 starts print processing of File A. pdf.

In Step S222, the controller 111 determines whether printing of the selected file is started. Specifically, for example, the controller 111 determines whether paper feeding is started for the print processing of the selected file. When it is determined that printing of the selected file is started (when it is determined that paper feeding is started for the print processing of the selected file), the control proceeds to Step S225. When it is determined that printing of the selected file is not started (when it is determined that paper feeding is not started for the print processing of the selected file), the processing in Step S222 is repeated.

In Step S223, the controller 111 displays, on the display 132, the file selection screen 301 (FIG. 3) on which the files in the USB memory 201 can be displayed and selected.

In Step S224, the user selects a file to be printed from the USB memory 201 on the file selection screen 301 by using the inputter 133. The user selects a file different from the file selected in Step S201. Specifically, for example, the user selects File B. pdf.

Before the processing Step S225, it is determined that printing of the selected file is started in Step S222 (Step S222: Yes), and the processing in Step S224 is executed.

In Step S225, the controller 111 displays, on the display 132, a print start confirmation screen 901 (FIG. 9) that allows printing the file selected in Step S224 (the second file) or a setting change screen for printing of the second file. For example, when Step S225 is executed subsequently to Step S224 or Step S226: No, the controller 111 displays the print start confirmation screen 901 (FIG. 9) on the display 132. When Step S225 is executed subsequently to Step S228: Yes, the controller 111 displays, on the display 132, the setting change screen that is displayed below a printing-in-progress screen 1101 in Step S228.

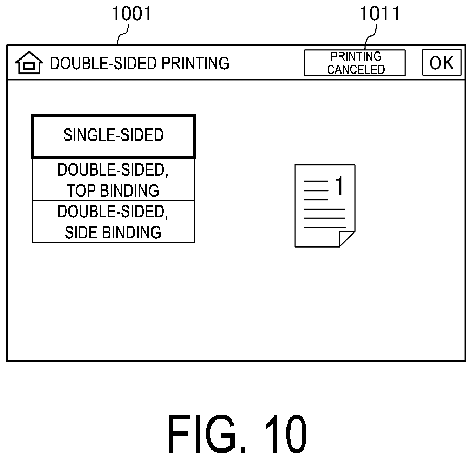

On the print start confirmation screen 901, a print start button 911 that starts printing, a button 912 that sets single-sided/double-sided, a button 913 that sets a sheet, a button 914 that sets monochrome/color, a button 915 that sets the number of prints, and a button 916 that cancels print processing currently executed are displayed. Specifically, for example, the button 916 is a button that cancels the print processing of File A. pdf that is selected in Step S201 and is currently subjected to print processing. When the button 912, the button 913, or the button 914 is pressed down, the screen of the display 132 is transitioned from the print start confirmation screen 901 to the setting change screen on which printing settings of the file selected in Step S224 are changed. Specifically, for example, when the button 912 is pressed down, the controller 111 displays, on the display 132, a setting change screen 1001 (FIG. 10) on which single-sided/double-sided is set. On the setting change screen 1001, a button 1011 that cancels the currently executed print processing is displayed. The setting change screen 1001 is an example of a screen for print setting for the second file. Note that the button 1011 may not be displayed on the change screen 1001. When the button 913 is pressed down, the controller 111 displays, on the display 132, a button setting change screen on which a sheet is set. When the button 914 is pressed down, the controller 111 displays, on the display 132, the setting change screen on which monochrome/color is set. Note that, on the button setting change screen on which a sheet is set and the setting change screen on which monochrome/color is set, a button that cancels the currently executed print processing may be displayed.

Similarly to the print start confirmation screen 901 illustrated in FIG. 9, the print start button 911 that starts printing of the second file (File B. pdf) and the button 916 that cancels the print processing of the first file (File A. pdf) are displayed at the same time. With this, the user does not confuse the display corresponding to the print processing of the first file (File A. pdf) with start of the print processing of the second file (File B. pdf).

In Step S226, the controller 111 determines whether the button 912, the button 913, or the button 914 of the print start confirmation screen 901 is pressed down and transition to the setting change screen occurs. When it is determined that transition to the setting change screen occurs, the control proceeds to Step S227. When it is determined that transition to the setting change screen does not occur (in other words, the print start confirmation screen 901 is displayed), the control returns to Step S225.

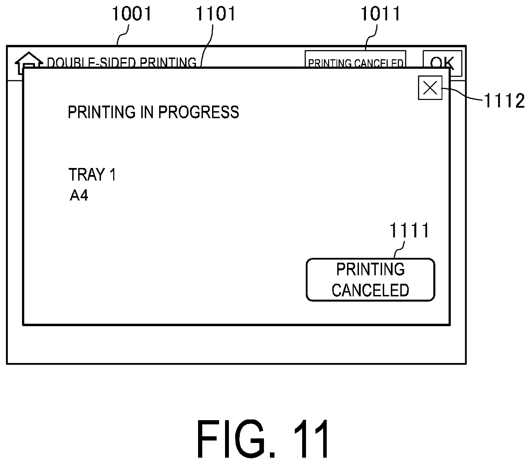

In Step S227, the controller 111 displays, on the display 132, the printing-in-progress screen 1101 (FIG. 11) indicating the file selected in Step S201 is being printed so that the printing-in-progress screen 1101 is superimposed on the setting change screen. Specifically, for example, the controller 111 displays, on the display 132, the printing-in-progress screen 1101 indicating that printing is in progress so that the printing-in-progress screen 1101 is superimposed on the setting change screen 1001. As illustrated in FIG. 11, on the printing-in-progress screen 1101, a message indicating that printing is in progress, a print cancel button 1111 that cancels printing, and a button (close (×) button) 1112 that closes the printing-in-progress screen 1101 are displayed.

In Step S228, the controller 111 determines whether the close (×) button of the printing-in-progress screen 1101 is pressed down by the user, whether printing is completed, or whether printing is canceled (whether the print cancel button 1111 of the printing-in-progress screen 1101 is pressed down by the user). When it is determined that the close (×) button of the printing-in-progress screen 1101 is pressed down by the user, printing is completed, or printing is canceled (whether the print cancel button 1111 of the printing-in-progress screen 1101 is pressed down by the user), the controller 111 deletes the printing-in-progress screen 1101, and the control returns to Step S225. When it is not determined that the close (×) button of the printing-in-progress screen 1101 is pressed down by the user, printing is completed, or printing is canceled (whether the print cancel button 1111 of the printing-in-progress screen 1101 is pressed down by the user), the processing in Step S228 is repeated. Note that, when the print processing of the file selected in Step S201 is completed or canceled, the processing in Steps S227 and S228 is omitted.

According to the image forming apparatus according to the other embodiment, the dedicated message screen is displayed until printing of the firstly selected file (the first file) is started, and selection of the files in the USB memory is disabled while the dedicated message is displayed. With this, the timing at which the password entry is required for the first file and the timing at which the file to be subsequently printed (the second file) is selected do not overlap with each other, the user does not confuse which file is being processed, and erroneous recognition of a file to be operated can be prevented.

According to the image forming apparatus according to the other embodiment, the print cancel button for the first file that is first selected and is being printed and the print start button for the second file that is subsequently selected are displayed at the same time. Thus, the user can recognize which file is being processed, and erroneous recognition of a file to be operated can be prevented.

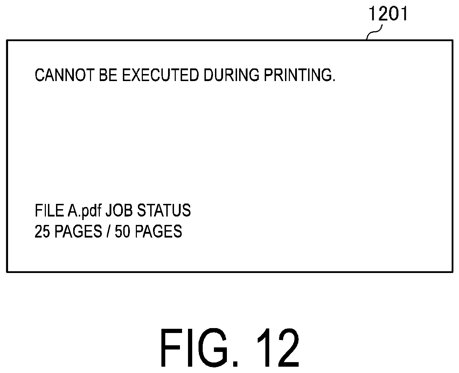

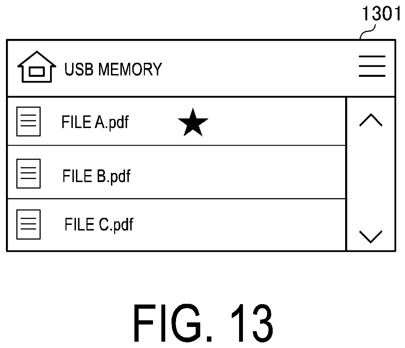

As modification examples of the other embodiment, the following processing may be executed.
(1) While the print start confirmation screen 901 (FIG. 9) is displayed on the display 132, and the file selected in Step S201 (the first file) is being subjected to print processing, when the print start button 911 that stars printing of the file selected in Step S224 (the second file) is pressed down, the controller 111 may not start printing of the second file, and may display a printing-in-progress screen 1201 (FIG. 12) on the display 132. On the printing-in-progress screen 1201 illustrated in FIG. 12, a message indicating that printing of the second file cannot be executed because printing is in progress, and a printing progress status of the first file being subjected to print processing (25 pages printed out of 50 pages) are displayed. By displaying the printing-in-progress screen 1201, the user is notified of the current status, and the user can easily recognize the timing at which the second file can be printed.
(2) In Step S223, the controller 111 may display, on the display 132, a file selection screen 1301 (FIG. 13) on which the files in the USB memory 201 are displayed and selected. On the file selection screen 1301 illustrated in FIG. 13, a mark (a star mark) is displayed next to a selected file. For example, on the file selection screen 1301, a star mark is displayed next to File A. pdf that has been selected. By displaying the mark (the star mark) next to the selected file, an erroneous selection of a file is reduced, and the selected file becomes easier to find when the selected file is selected again later.

The controller 111 may display, on the file selection screen on which the files in the USB memory 201 are displayed and selected, a mark that distinguishes whether each file in the USB memory 201 is an encrypted file, a non-encrypted file, or a file for which analysis of whether the file is an encrypted file has not been performed. With this, the user reduces erroneous selection of a file, and the selected file becomes easier to find when the selected file is selected again later.

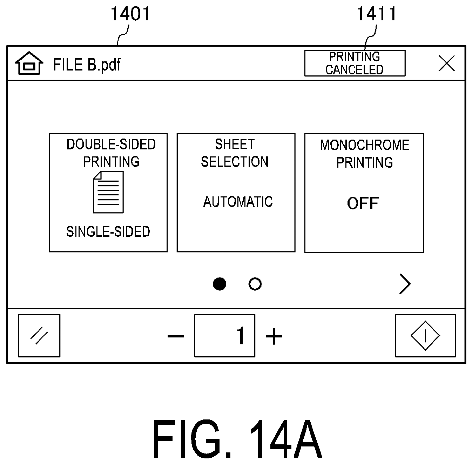

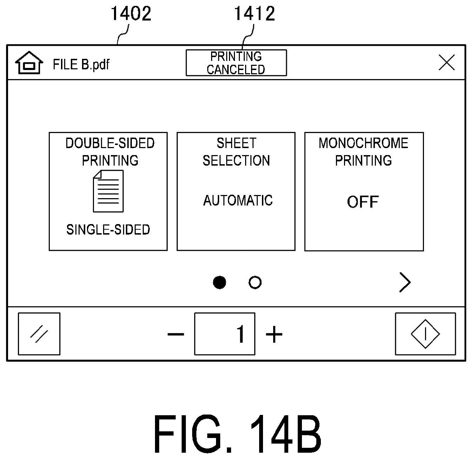

(3) On a print start confirmation screen for the second file being selected, the controller 111 may change a position of the print cancel button that cancels printing of the first file, in accordance with the first file currently subjected to print processing is an encrypted file. Specifically, for example, when the first file currently subjected to print processing is an encrypted file, a print cancel button 1411 that cancels printing of the first file is displayed near an upper-right portion of the print start confirmation screen 1401 on a print start confirmation screen 1401 for the second file as illustrated in FIG. 14A. When the first file currently subjected to print processing is a non-encrypted file, a print cancel button 1412 that cancels printing of the first file is displayed at the upper center of the print start confirmation screen 1402 on a print start confirmation screen 1402 for the second file as illustrated in FIG. 14B. With this, the user can recognize whether the first file currently subjected to print processing is an encrypted file.

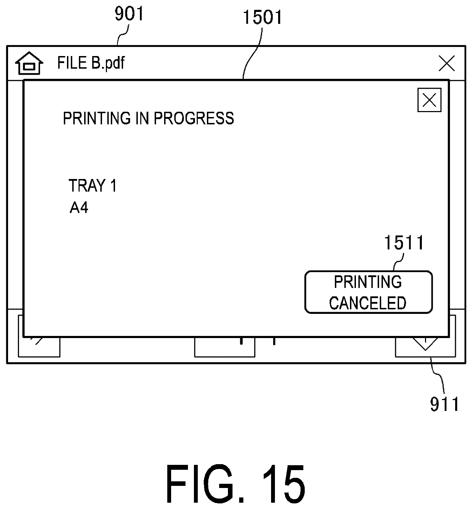

(4) In Step S225, the controller 111 may display, on the display 132, a printing-in-progress screen 1501 that the file selected in Step S201 (the first file) is being printed so that the printing-in-progress screen 1501 is superimposed on the print start confirmation screen 901 that allows printing of the file selected in Step S224 (the second file), as illustrated in FIG. 15. On the printing-in-progress screen 1501, a print cancel button 1511 that cancels printing of the first file is displayed. As described above, on the print start confirmation screen 901, the print start button 911 that starts printing of the second file is displayed, and the print start button 911 and the print cancel button 1511 are displayed at positions different from each other. The print start button 911 that starts printing of the second file and the print cancel button 1511 that cancels printing of the first file are displayed at positions different from each other, and hence the user is less likely to erroneously recognize a file to be operated.

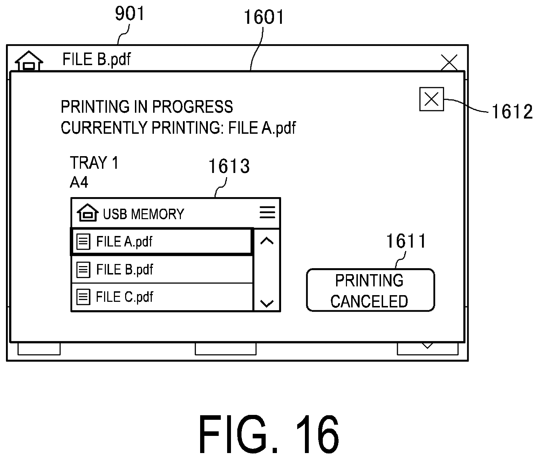

(5) In Step S225, the controller 111 may display, on the display 132, a printing-in-progress screen 1601 indicating that the file selected in Step S201 (the first file) is being printed so that the printing-in-progress screen 1601 is superimposed on the print start confirmation screen 901 that allows printing the file selected in Step S224 (the second file), as illustrated in FIG. 16. Note that the size of the printing-in-progress screen 1601 is substantially the same as the size of the print start confirmation screen 901. The print start confirmation screen 901 is covered by the printing-in-progress screen 1601, and becomes almost invisible. On the printing-in-progress screen 1601, a message indicating that printing is in progress, a message indicating a file being printed, a print cancel button 1611 that cancels printing, a button (close (×) button) 1612 that closes the printing-in-progress screen 1601, and a list 1613 of the files in the USB memory 201 are displayed. In the list 1613, the first file (File A. pdf) being printed is enclosed in a black frame so that the user can recognize which file is being printed. Note that, in the list 1613, a mark such as a star mark may be displayed next to the first file being printed. In this manner, on the printing-in-progress screen, the message "Currently printing: File A. pdf" indicating a file being printed is displayed, and the file being printed is enclosed in a black frame. With this, the user can recognize which file the processing corresponds to, and erroneous recognition of a file to be operated is prevented.

(6) When the MFP 101 has a user authentication function, a position of a print cancel button for the first file on a print start confirmation screen for the second file may be changed, according to whether a user printing the first file being printed and a user who selects the second file are the same. Specifically, for example, a first user logs in to the MFP 101 and selects the first file from the USB memory 201, the MFP 101 starts print processing of the first file, and the first user logs out of the MFP 101. Subsequently, a second user logs in to the MFP 101 and selects the second file from the USB memory 201, and the controller 111 displays, on the display 132, the print start confirmation screen 1401 for the second file as illustrated in FIG. 14A. As illustrated in FIG. 14A, when the user (the second user) who selects the second file and the user (the first user) who selects the first file are different, the controller 111 displays the print cancel button 1411 that cancels printing of the first file at the upper-right portion of the print start confirmation screen 1401 on the print start confirmation screen 1401 for the second file. Meanwhile, when the first user logs in to the MFP 101 and selects the first file from the USB memory 201, the MFP 101 starts print processing of the first file, and the first user further selects the second file from the USB memory 201, the controller 111 displays, on the display 132, the print start confirmation screen 1402 for the second file as illustrated in FIG. 14B. As illustrated in FIG. 14B, the user (the first user) who selects the second file and the user (the first user) who prints the first file are the same, the print cancel button 1412 that cancels printing of the first file is displayed at the upper center of the print start confirmation screen 1401 on the print start confirmation screen 1402 for the second file.

Note that the present invention is not limited to the embodiment described above and may be modified, and the above-described configuration can be replaced with a configuration that is substantially the same as the configuration illustrated in the embodiment described above, a configuration that achieves the same operations and effects, or a configuration that can achieve the same object.

While there have been described what are at present considered to be certain embodiments of the invention, it will be understood that various modifications may be made thereto, and it is intended that the appended claim cover all such modifications as fall within the true spirit and scope of the invention.

## Claims

1. An image forming apparatus (101) capable of being connected to an external storage medium (201) storing a first file and a second file, the image forming apparatus (101) comprising:
a printer (141) that performs printing;
a display (132); and
one or more controllers (111) that control the printer (141) and the display, wherein
when the first file is selected, and print start for the first file is confirmed, the one or more controllers (111) display a predetermined screen on the display (132), and disable selection of the second file.

2. The image forming apparatus (101) according to claim 1, wherein
in a case in which print start for the first file is confirmed, the one or more controllers (111):
determine whether the first file is encrypted;
display the predetermined screen on the display (132) until printing of the first file is started, when it is determined that the first file is not encrypted;
display, on the display, a printing-in-progress screen indicating that printing is in progress, after printing of the first file is started; and
display the second file so as to be selectable, when the printing-in-progress screen is closed by a user operation.

3. The image forming apparatus (101) according to claim 1, wherein
in a case in which print start for the first file is confirmed, the one or more controllers (111):
determine whether the first file is encrypted;
display an entry screen for a password of the first file on the display (132), when it is determined that the first file is encrypted;
display the predetermined screen on the display (132) and disable selection of the second file until printing of the first file is started after the password of the first file is entered; and
display, on the display (132), a printing-in-progress screen indicating that printing is in progress and disable selection of the second file, after printing of the first file is started.

4. The image forming apparatus (101) according to claim 3, wherein
when the printing-in-progress screen is closed by a user operation, the one or more controllers (111) display the second file so as to be selectable.

5. The image forming apparatus (101) according to claim 1, wherein
in a case in which print start for the first file is confirmed, the one or more controllers (111):
determine whether the first file is encrypted; and
display the second file so as to be selectable on the display (132), when it is determined that the first file is not encrypted.

6. The image forming apparatus (101) according to claim 5, wherein
during printing of the first file, the one or more controllers (111) display a button that cancels printing of the first file on a screen on which print start of the second file is confirmed.

7. The image forming apparatus (101) according to claim 5, wherein
during printing of the first file, when a screen for print start confirmation for the second file is transitioned to a screen for print setting for the second file, the one or more controllers (111) display, on the display (132), a printing-in-progress screen indicating printing of the first file is in progress.
